Europäisches Patentamt

European Patent Office

Office européen des brevets

(11) Numéro de publication : **0 299 236 B1**

(12) **FASCICULE DE BREVET EUROPEEN**

(45) Date de publication du fascicule du brevet :
13.03.91 Bulletin 91/11

(51) Int. Cl.⁵ : **A47J 19/00, A47J 43/046**

(21) Numéro de dépôt : 88109866.9

(22) Date de dépôt : 21.06.88

(54) **Appareil destiné à broyer et passer des produits alimentaires, tels que des fruits ou des légumes.**

(30) Priorité : 01.07.87 FR 8709325

(43) Date de publication de la demande :
18.01.89 Bulletin 89/03

(45) Mention de la délivrance du brevet :
13.03.91 Bulletin 91/11

(84) Etats contractants désignés :
AT BE CH DE ES GB IT LI NL SE

(56) Documents cités :
BE-A- 370 442
BE-A- 479 502
FR-A- 322 386
FR-A- 1 444 849
US-A- 2 011 211
US-A- 2 409 497

(73) Titulaire : **MOULINEX**
**7 à 15, rue Jules-Ferry**
**F-93171 Bagnolet Cédex (FR)**

(72) Inventeur : **Amiot, Jacques, Henri, Julien**
**Société Moulinex 25, route de Mamers**
**F-61000 Alencon (FR)**
Inventeur : **Fourny, Jacky, René, Paul**
**Société Moulinex 25, route de Mamers**
**F-61000 Alencon (FR)**
Inventeur : **Letournel, Gilles, Jean-Marie**
**Société Moulinex 2, rue de l'Industrie**
**Cormelles-le-Royal F-14123 Ifs (FR)**
Inventeur : **Parise, Vital, André**
**Société Moulinex 2, rue de l'Industrie**
**Cormelles-le-Royal F-14123 Ifs (FR)**

(74) Mandataire : **May, Hans Ulrich, Dr.**
**Patentanwalt Dr. H.U. May Thierschstrasse 27**
**W-8000 München 22 (DE)**

## Description

L'invention se rapporte aux appareils destinés à broyer et passer des produits alimentaires, tels que des fruits ou des légumes (pommes de terre cuites, par exemple), de manière à les réduire en purée.

L'invention concerne plus précisément des appareils de ce genre comportant un récipient de travail qui comprend une paroi de fond et une paroi latérale et dont une de ces parois comporte un tamis faisant communiquer l'intérieur du récipient avec l'extérieur, et qui renferme un outil presseur solidaire en rotation d'un arbre rotatif entraîné par un groupe moteur et destiné à provoquer le broyage et le passage des produits alimentaires au travers du tamis.

Un appareil de ce genre tel que défini par la partie pré-caractérisante de la revendication 1 est connu du brevet FR-A-322 386. On a constaté que dans cet appareil connu la fonction de réduction des légumes ou fruits en purée ainsi que le broyage des baies n'est pas correctement remplie ; non seulement l'outil presseur doit être équipé d'un autre outil tranchant destiné à couper les légumes ou fruits avant leur passage à travers le tamis, mais aussi le récipient de travail ne convient pas car la demanderesse a constaté que les produits alimentaires avaient tendance à échapper à l'outil presseur lors de sa rotation et à être refoulés vers la région centrale du récipient.

L'invention a pour but d'apporter à cet appareil diverses modifications qui en améliorent la commodité d'emploi et de fonctionnement, de manière non seulement à pouvoir réduire les légumes en purée, mais aussi de permettre le broyage des baies afin d'en extraire une purée liquide.

Selon une première de ces modifications, un appareil selon l'invention est caractérisé en ce que le bord libre d'extrémité de la palette s'étend à proximité de la face interne de la paroi latérale, laissant ainsi un léger jeu entre ledit bord et ladite face interne, et en ce que le récipient comprend une contre-paroi qui est montée amovible sur la paroi latérale et tansversalement à l'axe vertical, et qui est située au-dessus de la palette, à proximité du bord supérieur de ladite palette de manière à laisser un léger jeu entre elle et ledit bord supérieur, ladite contre-paroi est formée par un anneau dont l'orifice central porte sur son bord une jupe descendante qui s'étend sur une partie seulement de la hauteur du récipient, de manière à former une couronne dite de pression entre ladite jupe et la face interne de la paroi latérale, tandis que la palette comporte un bord interne dont une partie s'étend au moins le long de ladite jupe.

Ainsi, grâce à la couronne dite de pression réalisée dans le récipient, on comprendra que les produits alimentaires sont ainsi retenus et s'accumulent dans la région de coin de la palette, ce qui a pour effet de les comprimer et de les broyer, et de permettre notamment le broyage des baies afin d'en extraire une purée liquide.

En outre, on a constaté qu'au cours du broyage, notamment des baies, le jeu laissé entre le bord libre de la palette et la paroi latérale empêche tout coincement ou déformation de la palette dû à des éléments durs tels que les graines de baies, et ceci permet donc d'utiliser un moteur de faible puissance et d'un prix réduit.

Selon une seconde modification, le récipient étant équipé d'un couvercle amovible et le tamis étant monté amovible sur la paroi de récipient, l'invention prévoit que la mise en marche du moteur soit commandée par au moins un interrupteur dont l'actionnement est subordonné à la mise en place correcte du couvercle sur le récipient, et à cet effet, ledit couvercle et ledit tamis sont équipés mutuellement d'un dispositif de sécurité destiné à empêcher la mise en marche du groupe tant que le tamis n'est pas en place.

Ainsi, en l'absence du tamis et/ou lors d'une mauvaise mise en place du couvercle, l'appareil ne peut pas être mis en marche, ce qui assure une grande sécurité, notamment pour les enfants.

Les caractéristiques et avantages de l'invention ressortiront d'ailleurs de la description qui va suivre, à titre d'exemple, en référence aux dessins annexés dans lesquels :

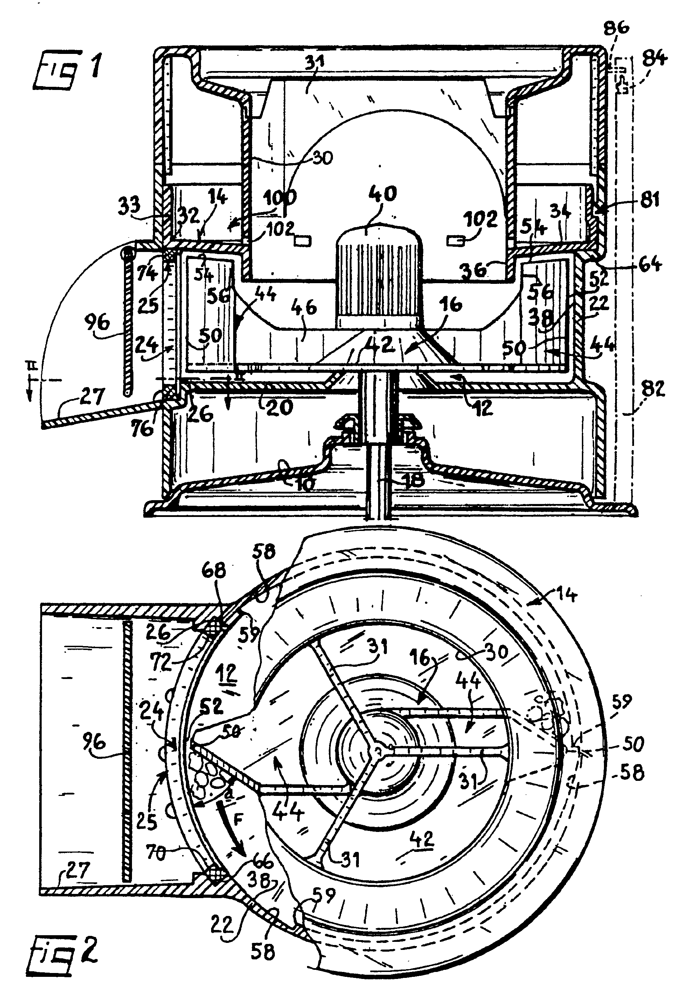

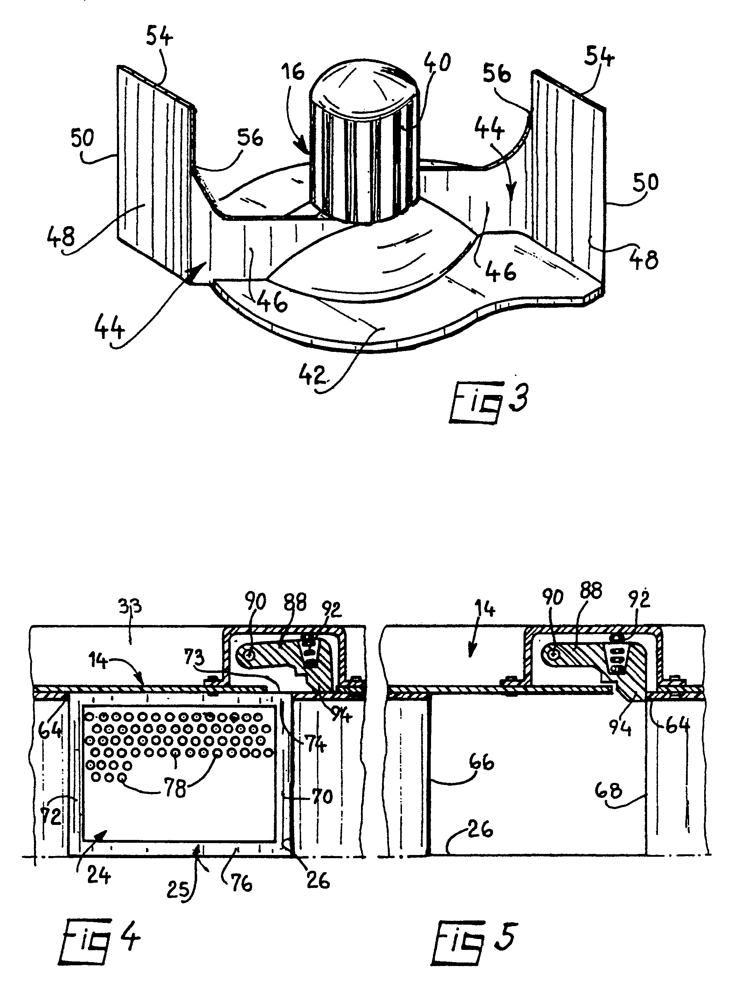

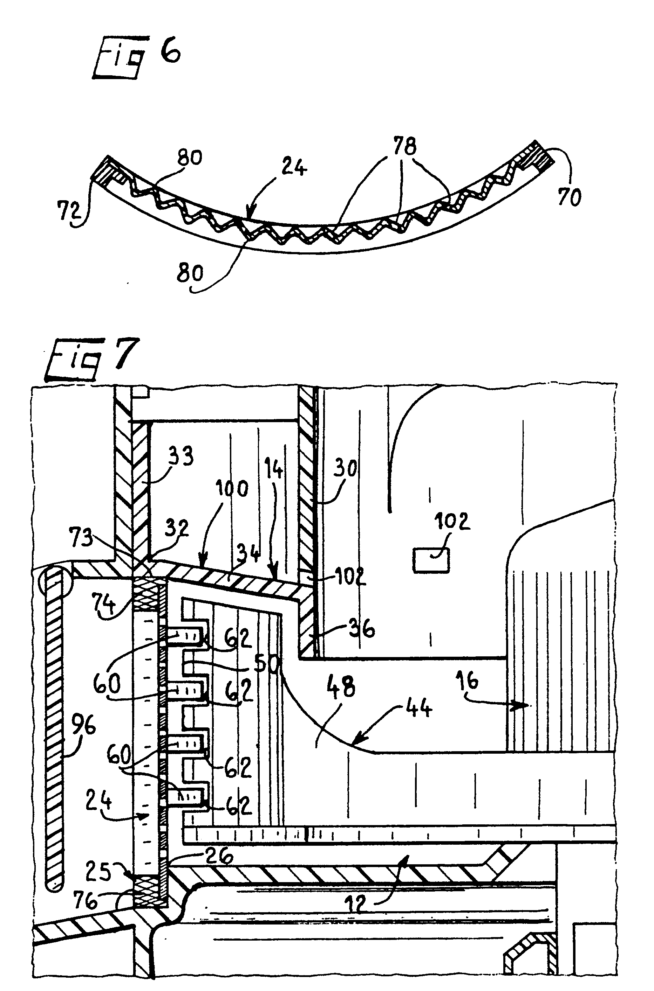

la figure 1 est une coupe verticale partielle d'un appareil réalisé selon l'invention, avec le récipient de travail posé sur un socle et fermé par un couvercle ; la figure 2 représente cet appareil en vue de dessus avec arrachement partiel du couvercle et coupe partielle selon la ligne II-II de la figure 1 ; la figure 3 représente en perspective et à échelle agrandie, l'outil presseur ; la figure 4 est une vue partielle d'un dispositif de sécurité équipant l'appareil et illustrant la fermeture du couvercle en présence du tamis ; la figure 5 est une vue analogue à la figure 4 mais sans la présence du tamis ; la figure 6 représente en coupe horizontale et à plus grande échelle, une forme particulière de tamis ; la figure 7 représente en coupe verticale partielle et à plus grande échelle, une variante de réalisation de l'outil presseur.

L'appareil électroménager partiellement représenté à la figure 1 comporte un socle 10 dont la face supérieure supporte, de façon amovible, un récipient de travail 12 qui est fermé par un couvercle amovible 14 et qui contient un outil presseur 16 adapté à s'accoupler avec l'arbre de sortie 18 d'un groupe moteur (non représenté) agencé dans ledit socle. Le récipient, présentant la forme d'un bol, comporte une paroi de fond 20 horizontale et une paroi latérale 22 de forme générale cylindrique à axe vertical qui comprend un tamis 24 constitué par un filtre solidaire d'un cadre 25, monté de façon amovible dans une ouverture 26 qui est pratiquée dans cette paroi 22 et dont la sortie est équipée d'une goulotte 27 d'évacuation des produits tamisés. Le couvercle 14 comporte une trémie 30 d'introduction des produits alimentaires dont la sortie débouche centralement dans le bol 12, et dont l'entrée est barrée par trois nervures de protection 31 destinées à empêcher l'introduction des doigts de la main de l'usager dans le bol 12. Le couvercle 14 étant monté à l'intérieur du bol 12, le bord périphérique 32 de ce couvercle comprend un rebord 33 dirigé vers le haut et adapté à se fixer sur la paroi latérale 22, tandis que l'anneau 34, formé par la paroi transversale du couvercle comprise entre la sortie de la trémie 30 et le bord périphérique (32) du couvercle 14, constitue une contre-paroi et présente sur le bord de l'orifice central, coaxialement au débouché de la trémie 30, une jupe descendante 36 qui s'étend sur une partie seulement de la hauteur du bol 12, de manière à former une couronne dite "de pression" entre ladite jupe et la face interne 38 de la paroi latérale 22.

L'outil presseur 16 comprend un moyeu central 40 accouplé à l'arbre 18 et relié à un disque plan 42 qui porte deux palettes 44 opposées agencées diamétralement. Chaque palette 44 comporte un bras 46 et une plaquette verticale 48 dont les faces frontales d'attaque respectives s'étendent transversalement à la direction de rotation (flèche F de la figure 2) entre la face interne 38 de la paroi latérale (22) et le moyeu 40. Chaque plaquette 48 ayant son bord libre d'extrémité 50 disposé en arrière par rapport audit bras, la face frontale de de cette plaquette forme avec la face interne 38, un coin s'ouvrant dans la direction de rotation (figure 2), ce coin ayant pratiquement la forme d'un dièdre dont l'angle plan $\underline{a}$ est un angle aigu compris, de préférence, entre 50 et 55 degrés. Comme on le voit mieux sur la figure 1, le bord libre d'extrémité 50 s'étend parallèlement à une génératrice de la paroi latérale 22 et à proximité de la face interne 38 laissant ainsi un léger jeu 52 (de préférence d'une largeur de 2 millimètres) entre ledit bord 50 et cette face 38. La plaquette 48 présente également un bord supérieur 54 qui est disposé parallèlement et à proximité de la contre-paroi 34, ainsi qu'un bord interne 56 dont une partie s'étend le long de la jupe 36.

Ainsi, grâce aux différents jeux laissés, d'une part, entre le bord libre 50 de la palette 44 et la face interne 38 du bol, et d'autre part, entre les bords supérieur 54 et interne 56 de ladite palette et les parois de la couronne de pression, on empêche, lors du broyage, tout coincement des produits alimentaires et notamment des graines contenues dans les fruits tels que les baies, et on évite également toute détérioration du groupe moteur lors de son fonctionnement en charge ou à vide.

Afin d'améliorer notamment le broyage des baies, on prévoit que la paroi latérale 22, du bol 12 présente sur sa face interne 38 trois légères dépressions 58 dont la profondeur va en augmentant dans le sens de rotation et qui forment ainsi chacune une arête 59 qui part de la paroi de fond 20 et qui s'étend vers le haut selon une génératrice de la paroi latérale de manière à créer un effet de cisaillement entre le bord libre 50 de la palette et cette arête. Selon une variante de réalisation illustrée à la figure 7, le cadre 25 du tamis 24 comporte une série de dents 60 espacées, placées les unes au-dessus des autres, et dirigées radialement vers l'intérieur en saillie de la paroi latérale, tandis que le bord libre 50 de la palette présente des échancrures 62 de forme complémentaire à celle des dents, de manière à créer un effet de cisaillement entre les bord respectifs des dents et des échancrures.

Afin d'obtenir un excellent tamisage, quels que soient les produits alimentaires introduits dans le récipient, l'appareil est équipé d'un jeu de tamis 24 ayant des filtres de différentes finesses. Pour permettre une utilisation commode de ces différents tamis, l'invention prévoit que l'ouverture 26 de la paroi latérale 22 est formée par une large échancrure qui est pratiquée dans le bord supérieur 64 de ladite paroi 22, et dont les deux bords latéraux verticaux 66, 68 constituent respectivement des glissières pour les côtés latéraux 70, 72 du cadre 25. Ce cadre 25 présente une forme complémentaire à celle de l'échancrure, c'est-à-dire un contour en forme de parallélogramme à surface courbe de sorte que, d'une part la face interne du filtre soit située au même niveau que la face interne 38 de la paroi 22, et d'autre part, la face externe 73 du côté supérieur 74 du cadre 25 est situé dans le plan contenant le bord supérieur 64 de la paroi 22 et le côté 76 de ce cadre vienne au niveau de la paroi de fond 20 du récipient, le filtre s'étendant alors pratiquement en hauteur entre la contre-paroi 34 et ladite paroi de fond 20.

Le jeu de tamis 24 comprend au moins 3 types de filtres constitués chacun à partir d'une tôle perforée dont les perforations sont formées par des trous cylindriques 78 disposés en quiconce comme illustré partiellement sur la figure 4, et dont la "transparence", rapport de la surface totale des trous 78 sur la surface totale du filtre, est comprise entre 25 et 60%.

Ainsi le filtre fin destiné, par exemple, à la préparation des coulis de fruits tels que des extraits de baies, comporte des trous d'un diamètre de 0,8 millimètres et sa "transparence" est de l'ordre de 25%. Le filtre moyen destiné, par exemple, à la préparation de coulis de tomates comporte des trous d'un diamètre de 1,5 millimètres et sa "transparence" est de l'ordre de 50%. Le filtre large destiné par example, à la confection de purée de pommes de terre comporte des trous d'un diamètre de 4 millimètres et sa "transparence" est comprise entre 55 et 60% ; et de préférence, pour réaliser une purée parfaite, la "transparence" est égale à 58%. Selon une variante de réalisation illustrée à la figure 6, le tamis 24 comprend un filtre qui présente une ondulation à profil sinusoïdal ménageant ainsi une série de saillies 80 orientées verticalement aussi bien sur la face interne que sur la face externe de la tôle.

On décrira maintenant un dispositif de sécurité qui est destiné à empêcher la mise en marche du groupe moteur tant que le couvercle 14 et le tamis 24 ne sont pas tous deux mis en place. Ce dispositif est plus particulièrement adapté à équiper un appareil dont le couvercle 14 peut être amené en position de fermeture sur le bol 12 par un dispositif de fixation par rotation 81, par exemple du genre baïonnette, agencé entre le rebord 33 et la face interne 38 du bol 12, et dont la mise en marche du groupe moteur est subordonnée à la fermeture correcte dudit couvercle 13. A cet effet, comme illustré en traits mixtes sur la figure 1, le socle 10 de l'appareil porte un bossage 82 qui est adjacent au bol 12 et qui contient un interrupteur 84 de commande du groupe moteur actionnable par une patte 86 solidaire du couvercle.

Comme illustré sur les figures 4 et 5, le dispositif de sécurité entre le couvercle et le tamis comprend un verrou 88 qui est monté mobile sur le couvercle 14, autour d'un axe horizontal 90, à l'encontre d'un ressort 92 et qui comporte un doigt 94 dirigé vers le bas et déplaçable selon une direction verticale, ce doigt 94 pouvant occuper, soit une position "inactive" (figure 4) pour laquelle il autorise la fermeture correcte du couvercle et donc de l'actionnement de l'interrupteur 84 par la patte 86 en vue de sa fermeture électrique, et en laquelle il est amené par son extrémité qui prend appui sur la face externe 73 du côté supérieur 74 du cadre 25 du tamis 24 inséré dans l'ouverture 26, et qui, lors de la rotation du couvercle, glisse sur ledit bord jusqu'à venir reposer sur le bord supérieur 64 du récipient, soit une position "active" (figure 5) pour laquelle il interdit la fermeture correcte du couvercle et donc l'actionnement de l'interrupteur 84, et en laquelle, en l'absence du tamis 24 dans l'ouverture 26, il vient en butée sur l'un 68, des bords latéraux de l'ouverture 26 et en laquelle également il est sollicité par le ressort 92.

Pour réaliser, par exemple, un coulis de framboises ou de myrtilles, on insère dans l'ouverture 26, le tamis 24 comportant le filtre ayant des trous de 0,8 millimètres ; on place le couvercle 14 sur le récipient 12 et on le fait tourner de manière à assurer sa fixation et l'actionnement de l'interrupteur 84, en fin de course du couvercle ; on introduit dans la trémie 30 par exemple les framboises qui tombent alors sur le disque 42 de l'outil presseur et qui sont entraînées en rotation dans le bol 12, par les palettes 44.

Grâce à l'action desdites palettes et sous l'effet de la force centrifuge (la vitesse de rotation de l'arbre de sortie 18 ayant une valeur comprise entre 300 et 600 tours par minute), les framboises sont amenées dans les coins formés entre la face frontale de chaque palette et la face interne 38 de la paroi latérale, et accumulées dans la zone de la couronne de pression, ce qui a pour effet de les comprimer et les broyer. Au cours de ce broyage, les graines des framboises sont éclatées par l'effet de cisaillement obtenu entre le bord libre de la palette et les arêtes 59 des dépressions 58. Enfin cette masse broyée est amenée en regard du tamis 24 et est poussée au travers des trous 78 produisant ainsi un coulis de framboises qui s'écoule par la goulotte 27. On notera qu'au cours du fonctionnement, aucun coincement de la palette ne se produit du fait de l'existence du jeu 52 qui assure également un effet de laminage à chaque cycle de rotation d'une palette. Pour éviter certaines éclaboussures dues à la compression et au grand débit au travers du filtre, la goulotte est équipée d'un volet amovible 96 monté pivotant autour d'un axe horizontal.

Au cours de ces préparations de coulis, on a constaté qu'il était très difficile de réaliser, à faible prix, une étanchéité au niveau de la couronne de pression, entre le couvercle 14 et le bol 12. C'est pourquoi l'invention prévoit de réaliser, entre le rebord 33 et la paroi externe de la trémie 30 et avec la face supérieure de l'anneau 34, une rigole annulaire 100 de collecte des débordements de jus, cette rigole 100 présentant une série de trous 102 débouchant à l'intérieur de la trémie d'introduction 30.

## Revendications

1. Appareil destiné à broyer et passer des produits alimentaires tels que des fruits ou des légumes de manière à les réduire en purée et comportant un récipient de travail (12) qui comprend une paroi de fond (20) et une paroi latérale (22) s'étendant selon une surface de révolution à axe vertical et comportant un tamis (24) faisant communiquer l'intérieur du récipient avec l'extérieur, et qui renferme un outil presseur (16) destiné à provoquer le broyage et le passage des produits alimentaires au travers du tamis et solidaire en rotation d'un arbre rotatif (18) disposé selon ledit axe vertical et entraîné par un groupe moteur, la région inférieure dudit tamis étant située à proximité de ladite paroi de fond (20), et l'outil presseur (16) comportant au moins une palette (44) dont la face frontale d'attaque est agencée transversalement à la direction de rotation entre la face interne (38) de la paroi latérale (22) et l'arbre rotatif (18), de manière à former avec la face interne de la paroi latérale, au moins dans la région d'extrémité de ladite face frontale et pratiquement sur toute la hauteur du tamis, un coin à angle aigu a s'ouvrant dans la direction de rotation, et dont le bord libre d'extrémité (50) s'étend parallèlement à la face interne (38) de ladite paroi latérale (22), **caractérisé en ce que** le bord libre d'extrémité (50) de la palette (44) s'étend à proximité de la face interne (38) de la paroi latérale (22), laissant ainsi un léger jeu (52) entre ledit bord (50) et ladite face interne (38), et en ce que le récipient (12) comprend une contre-paroi (34) qui est montée amovible sur la paroi latérale (22) et transversalement à l'axe vertical, et qui est située au-dessus de la palette (44), à proximité du bord supérieur (54) de ladite palette de manière à laisser un léger jeu entre elle et ledit bord supérieur (54), ladite contre-paroi (34) est formée par un anneau dont l'orifice central porte sur son bord une jupe descendante (36) qui s'étend sur une partie seulement de la hauteur du récipient (12), de manière à former une couronne dite de pression entre ladite jupe (36) et la face interne (38) de la paroi latérale (22), tandis que la palette (44) comporte un bord interne (56) dont une partie s'étend au moins le long de ladite jupe (36).

2. Appareil selon la revendication 1, **caractérisé en ce que** la paroi latérale (22) du récipient (12) présente sur sa face interne (38) au moins une légère dépression (58) dont la profondeur va en augmentant dans le sens de rotation et qui forme ainsi une arête (59) qui part de la paroi de fond (20) et qui s'étend vers le haut de manière à créer un effet de cisaillement entre le bord libre d'extrémité (50) de la palette (44) et cette arête (59).

3. Appareil selon la revendication 1 ou la revendication 2, **caractérisé en ce que** la paroi latérale (22) du récipient (12) comporte une série de dents (60) espacées, placées les unes au dessus des autres, et dirigées radialement vers l'intérieur, tandis que le bord libre d'extrémité (50) de la palette présente des échancrures (62) de forme complémentaire à celle des dents (60).

4. Appareils selon l'une quelconque des revendications précédentes, **caractérisé en ce que** le tamis (24) est constitué par un filtre solidaire d'un cadre (25), et est monté de façon amovible dans une ouverture (26) qui est pratiquée dans la paroi latérale (22) du récipient (12), ledit filtre s'étendant en hauteur pratiquement entre la contre-paroi (34) et la paroi de fond (20) du récipient (12).

5. Appareil selon la revendication 4, **caractérisé en ce que** l'ouverture (26) étant formée par une large échancrure qui est pratiquée dans le bord supérieur (64) de la paroi latérale (22) et qui s'étend en profondeur jusqu'à la paroi de fond (20) du récipient, et le cadre (25) du tamis présentant une forme complémentaire à celle de l'échancrure, les bords latéraux (66, 68) de ladite échancrure constituent respectivement des glissières pour les côtés latéraux (70, 72) dudit cadre (25), tandis que la face externe (73) du côté supérieur (74) du cadre est située dans le plan contenant le bord supérieur (64) de la paroi latérale (22).

6. Appareil selon la revendication 4 ou 5, **caractérisé en ce que**, d'une part, le récipient (12) étant équipé d'un couvercle amovible (14) qui peut être amené en position de fermeture sur ledit récipient par un dispositif de fixation par rotation (81), par exemple du genre baïonnette, et, d'autre part, la mise en marche du groupe moteur étant commandé par au moins un interrupteur (84) dont l'actionnement est subordonné à la fermeture correcte de ce couvercle (14) sur le récipient, ledit couvercle (14) et le tamis (24) sont équipés mutuellement d'un dispositif de sécurité destiné à empêcher la mise en marche du groupe moteur tant que ledit tamis (24) n'est pas mis en place.

7. Appareil selon la revendication 6, **caractérisé en ce que** le dispositif de sécurité comprend un verrou (88) comportant un doigt (94) qui est monté mobile sur le couvercle (14) selon une direction verticale et qui peut occuper, soit une position "inactive" pour laquelle il autorise la fermeture correcte du couvercle (14) et donc l'actionnement de l'interrupteur (84) en vue de sa fermeture électrique, et en laquelle il est maintenu par son extrémité qui repose et glisse sur le côté supérieure (74) du cadre (25) du tamis (24) inséré dans l'ouverture (26) de la paroi latérale, soit une position "active" pour laquelle il interdit la fermeture correcte du couvercle et donc l'actionnement de l'interrupteur (84) et en laquelle, en l'absence du tamis (24) dans l'ouverture (26), il vient en butée avec l'un (68) des bords latéraux (66, 68) de ladite ouverture.

8. Appareil selon la revendication 6 ou 7, **caractérisé en ce** qu'il comprend un socle (10) qui, d'une part, porte de façon amovible le récipient de travail (12) qui présente la forme d'un bol à paroi latérale cylindrique fermé par le couvercle (14) et dans lequel tourne l'outil presseur (16) adapté à s'accoupler avec l'arbre de sortie (18) du groupe moteur agencé dans ledit socle, et d'autre part, porte un bossage (82) adjacent audit bol (12) et contenant l'interrupteur (84) qui peut ainsi être actionné par une patte (86) solidaire dudit couvercle (14).

9. Appareil selon la revendication 8, **caractérisé en ce que** la paroi latérale (22) du bol (12) comporte, à la sortie de l'ouverture (26) recevant le tamis (24), une goulotte (27) d'évacuation des produits tamisés, tandis que le couvercle (14) comporte une trémie (30) d'introduction des produits alimentaires, dont l'entrée est barrée par au moins une nervure de protection (31) destinée à empêcher l'introduction des doigts de la main de l'usager dans ledit bol (12) et dont la sortie débouche centralement dans ledit bol ; l'anneau (34), formé par la paroi transversale du couvercle (14) comprise entre la sortie de la trémie (30) et le bord périphérique (32) dudit couvercle (14), constitue ainsi la contre-paroi.

10. Appareil selon la revendication 9, **caractérisé en ce que** le couvercle étant disposé à l'intérieur du bol, le bord périphérique (32) dudit couvercle (14) présente un rebord (33) dirigé vers le haut de manière à réaliser, entre la face interne de ce rebord (33) et la paroi externe de la trémie (30) ainsi qu'avec la face supérieure de l'anneau (34), une rigole annulaire (100) de collecte de débordement de jus passant entre la face interne (38) de la paroi latérale (22) et la face externe dudit rebord (33), cette rigole (100) présentant une série de trous (102) débouchant à l'intérieur de la trémie (30).

11. Appareil selon l'une quelconque des revendications 4 à 10, **caractérisé en ce qu'**il est équipé d'un jeu de tamis (24) constitué de filtres de différentes finesses, réalisés chacun à partir d'une tôle perforée dont les perforations sont formées par des trous cylindriques (78) disposés en quinconce et dont le rapport de la surface des trous sur la surface du filtre dit "transparence" est compris entre 25 et 60%.

12. Appareil selon la revendication 11, **caractérisé en ce que** le jeu de tamis (24) comprend au moins trois filtres : un filtre fin dont les trous (78) ont un diamètre de 0,8 mm et dont la "transparence" est de l'ordre de 25% ; un filtre moyen dont les trous (78) ont un diamètre voisin de 1,5 mm et dont la "transparence" est de l'ordre de 50% ; un filtre large dont les trous (78) ont un diamètre de 4 mm et dont la "transparence" est comprise entre 55 et 60% et de préférence est égale à 58%.

13. Appareil selon la revendication 11 ou 12, **caractérisé en ce que** la tôle perforée présente une ondulation à profil sinusoïdal ménageant ainsi une série de saillies (80) orientées verticalement aussi bien sur la surface interne que la surface externe de la tôle.

## Ansprüche

1. Gerät zum Zerkleinern und Durchpassieren von Lebensmittelprodukten, wie Früchten oder Gemüsen, um sie zu Püree zu zerkleinern, mit einem Arbeitsbehälter (12), der eine Bodenwand (20) und eine Seitenwand (22) aufweist, die sich gemäß einer Drehfläche mit vertikaler Achse erstreckt und ein den Innenraum des Behälters mit der Umgebung verbindendes Sieb (24) aufweist, wobei der Behälter ein Quetschwerkzeug (16) umschließt, das zum Zerkleinern und Durchpassieren von Lebensmittelprodukten durch das Sieb bestimmt und drehfest mit einer gemäß der vertikalen Achse angeordneten und durch ein Antriebsaggregat angetriebenen drehbaren Welle (18) verbunden ist, wobei der untere Bereich des Siebes in der Nähe der Bodenwand (20) angeordnet ist und das Quetschwerkzeug (16) mindestens eine Schaufel (44) aufweist, deren frontale Angriffsseite quer zur Drehrichtung zwischen der Innenseite (38) der Seitenwand (22) und der drehbaren Welle (18) so ausgebildet ist, daß sie mit der Innenseite der Seitenwand mindestens im Außenbereich der frontalen Angriffsseite und praktisch über die ganze Höhe des Siebes eine Ecke mit spitzem Winkel a bildet, der sich in Richtung der Drehung öffnet, wobei sich die freie Außenkante (50) der Schaufel parallel zur Innenseite (38) der Seitenwand (22) erstreckt, **dadurch gekenn-** zeichnet, daß die freie Außenkante (50) der Schaufel (44) sich in der Nähe der Innenseite (38) der Seitenwand (22) mit einem geringen Spielraum (52) zwischen dieser Kante (50) und der Innenseite (38) erstreckt und daß der Behälter (12) eine Gegenwand (34) aufweist, die abnehmbar auf der Seitenwand (22) und quer zur vertikalen Achse gehalten ist und die oberhalb der Schaufel (44) in der Nähe der Oberkante (54) der Schaufel so angeordnet ist, daß ein geringes Spiel zwischen ihr und der Oberkante (54) verbleibt, wobei die Gegenwand (34) von einem Ring gebildet ist, dessen Mittelöffnung an ihrem Rand eine nach unten gerichtete Schürze (36) trägt, die sich nur über einen Teil der Höhe des Behälters (12) erstreckt, so daß zwischen der Schürze (36) und der Innenseite (38) der Seitenwand (22) ein sog. Druckkranz gebildet wird, während die Schaufel (44) eine Innenkante (56) aufweist, von der sich ein Teil mindestens längs der Schürze (36) erstreckt.

2. Gerät nach Anspruch 1, **dadurch gekennzeichnet,** daß die Seitenwand (22) des Behälters (12) an ihrer Innenseite (38) mindestens eine geringe Vertiefung (58) aufweist, deren Tiefe in Richtung der Drehung zunimmt und die so eine Kante (59) bildet, die von der Bodenwand (20) ausgeht und sich nach oben erstreckt, um zwischen der freien Außenkante (50) der Schaufel (44) und dieser Kante (59) eine Scherwirkung zu erzeugen.

3. Gerät nach Anspruch 1 oder Anspruch 2, **dadurch gekennzeichnet,** daß die Seitenwand (22) des Behälters (12) eine Reihe von in Abständen übereinander angeordneten und radial nach innen gerichteten Zähnen (60) aufweist, während die freie Außenkante (50) der Schaufel Ausnehmungen (62) von einer zur Form der Zähne (60) komplementären Form aufweist.

4. Gerät nach einem der vorangehenden Ansprüche, **dadurch gekennzeichnet,**daß das Sieb (24) aus einem mit einem Rahmen (25) fest verbundenen Filter besteht und abnehmbar in einer in der Seitenwand (22) des Behälters (12) ausgebildeten Öffnung (26) gehalten ist, wobei sich das Filter der Höhe nach praktisch zwischen der Gegenwand (34) und der Bodenwand (20) des Behälters (12) erstreckt.

5. Gerät nach Anspruch 4, **dadurch gekennzeichnet,** daß die Öffnung (26) durch eine große Ausnehmung gebildet ist, die in der Oberkante (64) der Seitenwand (22) ausgebildet ist und sich in die Tiefe bis zur Bodenwand (20) des Behälters erstreckt, und daß der Rahmen (25) des Siebes eine Form, welche zu der Ausnehmung komplementär ist, aufweist, wobei die Seitenkanten (66, 68) der Ausnehmung jeweils Gleitschienen für die seitlichen Kanten (70, 72) des Rahmens (25) bilden, während die Außenseite (73) der Oberkante (74) des Rahmens in der die Oberkante (64) der Seitenwand (22) enthaltenden Ebene liegt.

6. Gerät nach Anspruch 4 oder 5, **dadurch**

gekennzeichnet, daß einerseits der Behälter (12) mit einem abnehmbaren Deckel (14) ausgerüstet ist, der auf dem Behälter durch eine Drehbefestigungsvorrichtung (81), beispielsweise eine Bajonettvorrichtung, in die Schließstellung gebracht werden kann und andererseits die Einschaltung des Antriebsaggregats durch mindestens einen Schalter (84) gesteuert ist, dessen Betätigung dem korrekten Schließen dieses Deckels (14) auf dem Behälter untergeordnet ist, und daß der Deckel (14) und das Sieb (24) wechselseitig mit einer Sicherheitsvorrichtung ausgerüstet sind, welche das Einschalten des Antriebsaggregats verhindert, wenn das Sieb (24) nicht an seinem Platz ist.

7. Gerät nach Anspruch 6, **dadurch gekennzeichnet,** daß die Sicherheitsvorrichtung einen Riegel (88) mit einem Zapfen (94) aufweist, der am Deckel (14) gemäß einer senkrechten Richtung beweglich gehalten ist und entweder eine "inaktive" Stellung einnehmen kann, in welcher er das richtige Schließen des Deckels (14) und damit die Betätigung und das Einschalten des Schalters (84) ermöglicht und in welcher er durch sein Ende gehalten ist, das auf der Oberkante (74) des Rahmens (25) des in die Öffnung (26) der Seitenwand eingesetzten Siebes aufliegt und gleitet, oder eine "aktive" Stellung einnehmen kann, in welcher er das richtige Schließen des Deckels und damit die Betätigung und Einschaltung des Schalters (84) verhindert und in welcher er in Abwesenheit des Siebes (24) in der Öffnung (26) in Anschlag mit der einen (68) der seitlichen Kanten (66, 68) dieser Öffnung gelangt.

8. Gerät nach Anspruch 6 oder 7, **dadurch gekennzeichnet,** daß es einen Sockel (10) aufweist, der einerseits abnehmbar den Arbeitsbehälter (12) trägt, der die Form einer Schüssel mit seitlicher zylindrischer Wand hat, die durch den Deckel (14) verschlossen ist und in der sich das Quetschwerkzeug (16) dreht, das mit der Abtriebswelle (18) des im Sockel angeordneten Antriebsaggregats kuppelbar ist, und andererseits der Sockel einen der Schüssel (12) benachbarten Wulst (82) trägt, der den Schalter (84) enthält, der so von einem mit dem Deckel (14) fest verbundenen Fuß (86) betätigbar ist.

9. Gerät nach Anspruch 8, **dadurch gekennzeichnet,** daß die Seitenwand (22) der Schüssel (12) am Auslaß der das Sieb (24) aufnehmenden Öffnung (26) eine Ablaufrinne (27) für die durchpassierten Produkte aufweist, während der Deckel (14) einen Einfülltrichter (30) für die Lebensmittelprodukte aufweist, dessen Einlaß durch mindestens eine Schutzrippe (31) versperrt ist, um das Einführen von Fingern der Hand des Benutzers in die Schüssel (12) zu verhindern, und dessen Auslaß mittig in der Schüssel mündet, und daß der Ring (34), der von der zwischen dem Auslaß des Trichters (30) und dem Umfangsrand (32) des Deckels (14) liegenden Querwand des Deckels (14) gebildet ist, die Gegenwand bildet.

10. Gerät nach Anspruch 9, **dadurch gekennzeichnet,** daß der Deckel im Inneren der Schüssel angeordnet ist und der Umfangsrand (32) des Deckels (14) eine nach oben gerichtete Randleiste (33) aufweist, so daß zwischen der Innenseite dieser Randleiste (33) und der Außenwand des Trichters (30) sowie mit der Oberseite des Ringes (34) eine ringförmige Rinne (100) zum Auffangen des zwischen der Innenseite (38) der Seitenwand (22) und der Außenseite der Randleiste (33) hindurch überlaufenden Saftes gebildet wird, wobei diese Rinne (100) eine Reihe von im Inneren des Trichters (30) mündenden Löchern (102) aufweist.

11. Gerät nach einem der Ansprüche 4 bis 10, **dadurch gekennzeichnet,** daß es mit einem Satz von Sieben (24) ausgerüstet ist, welcher von Filtern mit verschiedenen Feinheiten gebildet ist, die jedes aus einem Lochblech hergestellt sind, dessen Perforationen von zylindrischen Löchern (78) gebildet sind, die im Zickzack angeordnet sind, wobei das Verhältnis der Oberfläche der Löcher zur Oberfläche des Filters, die sog. "Transparenz", zwischen 25 und 60% liegt.

12. Gerät nach Anspruch 11, **dadurch gekennzeichnet,** daß der Satz von Sieben (24) mindestens drei Filter umfaßt : ein Feinfilter, dessen Löcher (78) einen Durchmesser von 0,8 mm haben und dessen "Transparenz" in der Größenordnung von 25% liegt ; ein mittleres Filter, dessen Löcher (78) einen Durchmesser in der Nähe von 1,5 mm haben und dessen "Transparenz" in der Größenordnung von 50% liegt ; ein Grobfilter, dessen Löcher (78) einen Durchmesser von 4 mm haben und dessen "Transparenz" zwischen 55 und 60% und vorzugsweise bei 58% liegt.

13. Gerät nach Anspruch 11 oder 12, **dadurch gekennzeichnet,** daß das gelochte Blech eine Wellung mit sinusförmigem Profil aufweist, so daß eine Reihe von vertikal verlaufenden Vorsprüngen (80) sowohl auf der Innenseite wie auf der Außenseite des Bleches gebildet sind.

## Claims

1. A device adapted to crush and move foodstuffs such as fruits or vegetables so as to reduce them to a puree comprising a receptacle (12) in which the food is processed which comprises a bottom wall (20) and a side wall (22) extending over a surface of revolution having a vertical axis and a sieve (24) connecting the interior of the receptacle with the outside, and containing a pressing tool (16) which is adapted to cause the crushing and the movement of the foodstuffs through the sieve and which is fixed in rotation to a rotatable shaft (18) disposed on the said vertical axis and driven by a motor unit, the lower region of the said sieve being situated near the said bottom wall (20), and the pressing tool (16) comprising at least one blade (44) the front, cutting face of which is mounted transversely to the direction of rotation between the internal face (38) of the side wall (22) and the rotatable shaft (18) in such a way as to form with the internal face of the side wall, at least in the end region of the said front face and over almost the entire height of the sieve, a corner having an acute angle a which opens out in the direction of rotation, and wherein the free end edge (50) of the blade extends parallel to the internal face (38) of the said side wall (22), characterized in that the free end edge (50) of the blade (44) extends near the internal face (38) of the side wall (22), leaving a small gap (52) between the said edge (50) and the said internal face (38), and in that the receptacle (12) comprises a retaining wall (34) which is removably mounted on the side wall (22), transversely to the vertical axis, and which is situated above the blade (44), near the upper edge (54) of the said blade, in such a way as to leave a small gap between it and the said upper edge (54), the said retaining wall (34) being formed by an annulus, the central opening of which carries a descending skirt (36) on its edge which extends over only part of the depth of the receptacle (12) so as to form a collar, called a pressure collar, between the said skirt (36) and the internal face (38) of the side wall (22), whilst the blade (44) comprises an internal face (56) a part of which extends for at least the length of the said skirt (36).

2. A device according to claim 1, characterized in that the side wall (22) of the receptacle (12) comprises on its internal face (38) at least one slight depression (58) the depth of which increases in the direction of rotation and which thus forms a stop (59) which starts from the bottom wall (20) and extends upwards so as to create a shearing action between the free end edge (50) of the blade (44) and this stop (59).

3. A device according to claim 1 or claim 2, characterized in that the side wall (22) of the receptacle (12) comprises a series of spaced teeth (60) located above one another and directed radially inwards, whilst the free end edge (50) of the blade comprises notches (62) having a shape complementary to that of the teeth (60).

4. A device according to any one of the preceding claims, characterized in that the sieve (24) consists of a filter fixed to a frame (25) and is mounted removably in an opening (26) which is made in the side wall (22) of the receptacle (12), the said filter extending in height practically between the casing (34) and the bottom wall (20) of the receptacle (12).

5. A device according to claim 4, characterized in that the opening (26) is formed by a large notch made in the upper edge (64) of the side wall (22) and extending in depth as far as the bottom wall (20) of the receptacle, and the frame (25) of the sieve having a shape complementary to that of the notch, the side edges (66, 68) of the said notch constitute respectively slides for the lateral sides (70, 72) of the said frame (25), whilst the external face (73) of the upper side (74) of the frame is located in the plane containing the upper edge (64) of the side wall (22).

6. A device according to claim 4 or 5, characterized in that, on the one hand, the receptacle (12) being equipped with a removable cover (14) which can be brought into a closing position on the said receptacle by a device for fastening by turning (81), for example of the bayonet type, and, on the other hand, the starting of the motor unit being controlled by at least one switch (84) the actuation of which depends on correct closing of the cover (14) on the receptacle, the said cover (14) and the sieve (24) are mutually equipped with a safety device adapted to prevent starting of the motor unit when the said sieve (24) is not in position.

7. A device according to claim 6, characterized in that the safety device comprises a lock (88) comprising a finger (94) which is mounted on the cover (14) so that it is movable in a vertical direction and can occupy either an "inactive" position in which it allows correct closing of the cover (14) and thus the actuation of the switch (84) with regard to it closing an electric circuit, and in which it is held by its end which rests and slides on the upper side (74) of the frame (25) of the sieve (24) inserted in the opening (26) in the side wall, or an "active" position in which it prevents correct closing of the cover and thus the actuation of the switch (84) and in which, in the absence of the sieve (24) from the opening (26), it abuts on one (68) of the side edges (66, 68) of the said opening.

8. A device according to claim 6 or 7, characterized in that it comprises a base (10) which, on the one hand, bears in a removable manner the receptacle (12) in which the work is performed, the receptacle having the form of a bowl comprising a cylindrical side wall, closed by the cover (14), in which the pressing tool (16), which is adapted to be coupled to the output shaft (18) of the motor unit mounted in the said base, rotates, and, on the other hand, carries a boss (82) adjacent to the said bowl (12) and containing the switch (84) which can thus be actuated by a lug (86) fixed to the said cover (14).

9. A device according to claim 8, characterized in that the side wall (22) of the bowl (12) comprises, at the outlet from the opening (26) holding the sieve (24), a chute (27) for removal of the screened products whilst the cover (14) comprises a loading hopper (30) for introducing the foodstuffs, the inlet of which is blocked by at least one protective rib (31) adapted to prevent the insertion of fingers of the user's hand into the said bowl (12) and the outlet of which opens centrally into the said bowl; the annulus (34) formed by the transverse wall of the cover (14) comprised between the outlet of the loading hopper (30) and the peripheral edge (32) of the said cover (14) thus constituting the retaining wall.

10. A device according to claim 9, characterized in that the cover being disposed inside the bowl, the peripheral edge (32) of the said cover (14) comprises a shoulder (33) directed upwards so as to form between the internal face of this shoulder (33), the external wall of the loading hopper (30) and the upper face of the annulus (34), an annular channel (100) for collecting the overflow of juice passing between the internal face (38) of the side wall (22) and the external face of the said shoulder (33), this channel (100) comprising a series of holes (102) opening into the interior of the loading hopper (30).

11. A device according to any one of claims 4 to 10, characterized in that it is equipped with a set of sieves (24) consisting of filters varying in fineness each formed by a perforated metal sheet in which the perforations are formed by cylindrical holes (78) disposed in zigzag manner and the ratio of the surface are a of the holes to the surface area of the filter, called the "transparency", is between 25 and 60%.

12. A device according to claim 11, characterized in that the set of sieves (24) comprises at least three filters : a fine filter in which the holes (78) have a diameter of 0,8 mm and the "transparency" of which is about 25% ; a medium filter in which the holes (78) have a diameter of about 1.5 mm and the "transparency" of which is about 50% ; and a coarse filter in which the holes (78) have a diameter of 4 mm and the "transparency" of which is between 55 and 60% and preferably is 58%.

13. A device according to claim 11 or 12, characterized in that the perforated metal sheet comprises an undulation with a sinusoidal profile thus forming a series of vertically orientated projections (80) both on the internal surface and on the external surface of the metal sheet.

EP 0 299 236 B1

FIG 1

FIG 2

10

Fig 3

Fig 4

Fig 5

Fig 6

Fig 7